# EUROPEAN PATENT SPECIFICATION

(11) **EP 0 675 746 B1**
(45) Date of publication and mention of the grant of the patent: **03.12.1997**
(21) Application number: 94901983.0
(22) Date of filing: 17.12.1993
(51) Int. Cl.: A62C 35/68, F16K 31/122

(54) **VALVE**
VENTIL
VANNE

(30) Priority: 22.12.1992 FI 925837
(43) Date of publication of application: 11.10.1995
(73) Proprietor: SUNDHOLM, Göran, SF-04310 Tuusula (FI)
(72) Inventor: SUNDHOLM, Göran, SF-04310 Tuusula (FI)
(74) Representative: Jenkins, Peter David
(86) International application number: FI9300547
(87) International publication number: WO9414501

(56) References cited:
- GB-A- 2 161 586
- SE-B- 414 423
- US-A- 3 862 738

## Description

The present invention relates to a valve and a fire fighting installation incorporating the same, in particular an installation that operates with a high drive pressure. The valve comprises a liquid inlet, a liquid outlet and a spindle movable between a first position in which the spindle closes direct connection from the inlet to the outlet, and a second position in which the spindle permits direct connection from the inlet to the outlet. Such a valve is known from SE-B-414423 (GB-A-1477565)

US-A-3862738 discloses a valve with a spindle that comprises a through throttle providing a connection from the inlet to a pressure chamber. The spindle is forced by a spring into a closed position, when the pressure is equal on both sides of the throttle. The throttle is dimensioned in such a manner that the pressure fall over the throttle is sufficiently great to set the spindle in motion from the closed position towards an opened position, when a pilot valve is opened so that the hydraulic pressure in the chamber can escape.

By a high drive or operating pressure is here generally meant a pressure in the range of about 50 to about 300 bar, as compared to a drive pressure of generally no more than 10 bar in conventional sprinkler installations.

The primary aim of the invention is to provide a new valve which is of a simple structure and thereby is cheap and which is reliable.

Accordingly, the present invention provides a valve for a fire fighting installation, in particular for an installation operating at a high pressure, the valve comprising a liquid inlet, a liquid outlet and a spindle movable between a first position in which the spindle closes direct connection from the inlet to the outlet, and a second position in which the spindle permits direct connection from the inlet to the outlet; characterized in that the spindle comprises a through throttle for providing a connection from the inlet via the throttle and an actuator unit, sensitive to liquid flow, to the outlet in the first position of the spindle, the spindle is forced by a spring into the first position when the pressure is equal on both sides of the throttle of the spindle, and the throttle of the spindle is dimensioned such that the pressure fall over the throttle, at least by a liquid flow therethrough at the operating pressure of the fire fighting installation, is sufficiently great to set the spindle in motion from the first position towards the second position.

In a preferred embodiment of the invention, the spindle further comprises a shoulder face upon which the liquid pressure of the inlet acts after the spindle has moved from the first position, in order to drive the spindle towards the second position.

The actuator unit preferably comprises a sensor element which reacts on change of temperature of stationary or flowing liquid, respectively, the sensor element being positioned such that the flow passage past the sensor element is narrow.

The present invention also provides a fire fighting installation comprising a drive unit, a valve and a spray head, wherein the drive unit is adapted to create an operating pressure of the fire fighting installation and provide the spray head with extinguishing liquid through the valve, the valve comprises a liquid inlet, a liquid outlet and a movable spindle, the inlet being connected to the drive unit, the outlet being connected to the spray head, and the spindle being movable between a first position in which the spindle closes direct connection from the inlet to the outlet, and a second position in which the spindle permits direct connection from the inlet to the outlet; characterized in that the valve further comprises an actuator unit sensitive to liquid flow from the outlet which is adapted to activate the drive unit to create the operating pressure of the fire fighting installation, the spindle comprises a through throttle for providing a connection from the inlet via the throttle to the outlet in the first position of the spindle, the spindle is forced by a spring into the first position when the pressure is equal on both sides of the throttle of the spindle, the activation of the spray head is adapted to create a liquid flow from the outlet and a pressure fall in the outlet and over the throttle, and the throttle and the spring are dimensioned such that the pressure fall over the throttle, at least by a liquid flow therethrough at the operating pressure of the fire fighting installation, sets the spindle in motion from the first position towards the second position.

The invention shall in the following be described in more detail with reference to the attached drawing which, by way of example, shows a preferred embodiment.
Figure 1 shows a diagram of a valve according to the invention.
Figure 2 shows a longitudinal section of a preferred embodiment of the valve of figure 1.
Figure 3 shows an end view of a valve block with three valves.

In the drawing the valve is generally indicated by the reference numeral 1. The valve 1 includes a preferably temperature sensitive actuator unit 2, which shall be described in detail later, a test connection 3, which is closed in the drawing, a shut-off valve 4, which can be manually operated, and a manometer 5. A liquid inlet line to the valve 1 from the drive unit of a fire fighting installation is indicated by reference numeral 6 and an outlet line from the valve 1 to at least one but preferably a plurality of spray heads or sprinklers is indicated by reference numeral 7.

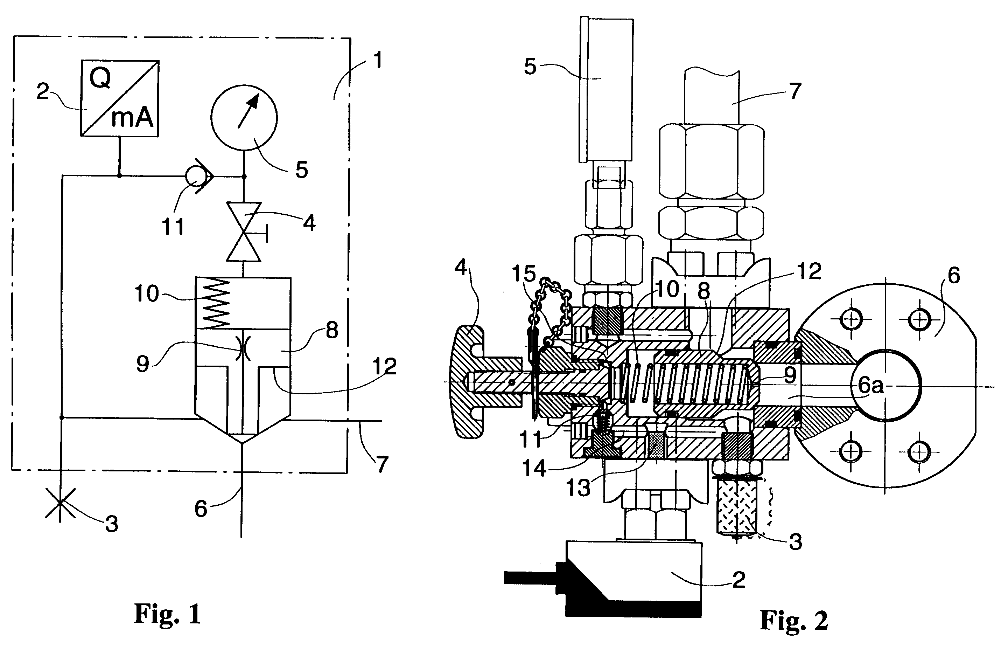

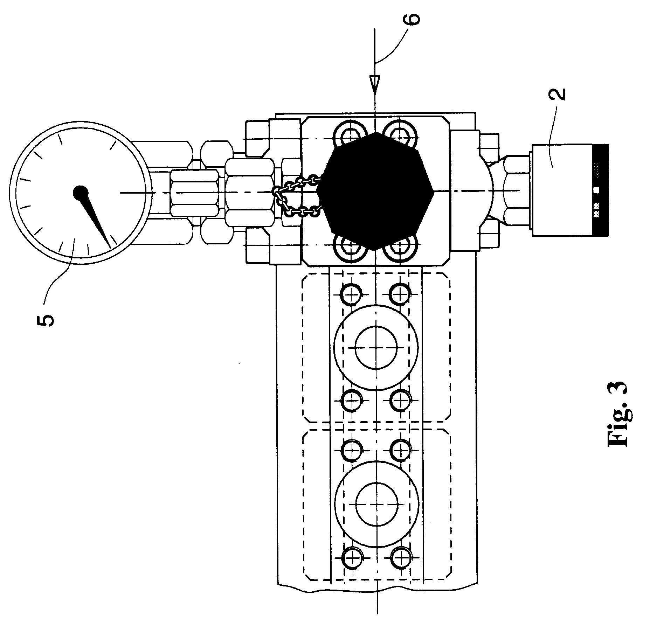

The valve 1 further comprises a movable spindle 8 which has a throttled through connection 9 and which is forced by a spring 10 into abutment against the inlet 6a of the valve 1 when the valve 1 is in a state of rest or stand-by as shown in figures 1 and 2.

In the state of stand-by of the valve 1 the pressure in the inlet line 6 can preferably be kept relatively low, e.g. about 15 bar. The connection from the inlet line 6 through the throttle 9, the chamber containing the spindle 8 and including the spring 10, the valve 4, a back valve 11 and the actuator unit 2 to the outlet line 7 is under pressure, but since the spray heads connected to the outlet line 7 are inactive, i.e. closed, there is no liquid flow in this connection. The pressure is equal on both sides of the spindle 8 and the spindle 8 is held by the spring 10 in the position shown in figures 1 and 2.

When one or several spray heads connected to the outlet line 7 are activated as a result of a fire in their respective action range, there occurs a small liquid flow through the said connection 6a-9-4-11-2-7. The actuator unit 2 is arranged to react upon this liquid flow to produce a signal for activating the drive unit of the fire fighting installation, e.g. a pump or a unit of hydraulic accumulators, to full operating pressure. As the full operating pressure is active in the inlet line 6, the pressure fall over the throttle 9 increases so much that the spindle 8 is driven from its position of stand-by, i.e. the spindle 8 is driven upwards in figure 1 and to the left in figure 2, and as soon as the spindle 8 is no longer in abutment against the inlet 6a of the valve 1, the pressure in the inlet line 6 acts on a shoulder face 12 provided on the spindle 8 and thereby rapidly drives the spindle 8 to the opposite end position, with a direct open connection from the inlet line 6 to the outlet line 7.

When the fire has been extinguished, the valve 4 can be closed. The liquid flow through the connection 9-11-2 then stops and the same pressure will act on both sides of the spindle 8 whereat the spring 10 drives the spindle 8 back to the position shown in figures 1 and 2.

The actuator unit 2 preferably comprises a temperature sensitive element 13 which reacts by producing an actuating signal on the basis of that temperature change which occurs when the sensor element 13 is surrounded either by stationary liquid or by flowing liquid. This principle is known as such.

However, a novel feature of the valve according to the invention is to arrange that the amount of liquid which, stationary or flowing, respectively, surrounds the sensor element 13 is considerably smaller than in known applications, whereby that mutual interaction between the liquid and the sensor element 13, which is required for obtaining a signal, is quickly achieved. In the valve 1 according to the invention this is preferably obtained by positioning the sensor element 13 in such a way in a channel 14 that the flow passage past the sensor element 13 is narrow. Thus one obtains a desired quick activation to full operating pressure in the inlet line 6, and the sensor element 13 can preferably also be utilized for disconnecting the operating pressure from the inlet line 6 when the extinguishing procedure has been completed.

The valve 4 can be manually operated and is in open position in figure 2. When the valve 4 is in shut position, the gap 15 is closed.

As illustrated in figure 3, a plurality of valves can be joined to form a block with a common inlet line 6 and a common actuator unit 2. Each valve can serve a fire section of its own.

## Claims

1. A valve for a fire fighting installation, in particular for an installation operating at a high pressure, the valve comprising a liquid inlet (6), a liquid outlet (7) and a spindle (8) movable between a first position in which the spindle (8) closes direct connection from the inlet (6) to the outlet (7), and a second position in which the spindle (8) permits direct connection from the inlet (6) to the outlet (7); characterized in that the spindle (8) comprises a through throttle (9) for providing a connection from the inlet (6) via the throttle (9) and an actuator unit (2), sensitive to liquid flow, to the outlet (7) in the first position of the spindle (8), the spindle (8) is forced by a spring (10) into the first position when the pressure is equal on both sides of the throttle (9) of the spindle (8), and the throttle (9) of the spindle (8) is dimensioned such that the pressure fall over the throttle (9), at least by a liquid flow therethrough at the operating pressure of the fire fighting installation, is sufficiently great to set the spindle (8) in motion from the first position towards the second position.

2. A valve according to claim 1, characterized in that the spindle (8) comprises a shoulder face (12) upon which the liquid pressure of the inlet (6) acts after the spindle (8) has moved from the first position, in order to drive the spindle (8) towards the second position.

3. A valve according to claim 1, characterized in that a manually operable shut-off valve (4) is included in the connection (6-9-2-7).

4. A valve according to claim 1, characterized in that the actuator unit (2) comprises a sensor element (13) which reacts on change of temperature of stationary or flowing liquid, respectively, the sensor element (13) being positioned such that the flow passage past the sensor element (13) is narrow.

5. A fire fighting installation comprising a drive unit, a valve (1) and a spray head, wherein the drive unit is adapted to create an operating pressure of the fire fighting installation and provide the spray head with extinguishing liquid through the valve (1), the valve (1) comprises a liquid inlet (6), a liquid outlet (7) and a movable spindle (8), the inlet (6) being connected to the drive unit, the outlet (7) being connected to the spray head, and the spindle (8) being movable between a first position in which the spindle (8) closes direct connection from the inlet (6) to the outlet (7), and a second position in which the spindle (8) permits direct connection from the inlet (6) to the outlet (7); characterized in that the valve (1) further comprises an actuator unit (2) sensitive to liquid flow from the outlet (7) which is adapted to activate the drive unit to create the operating pressure of the fire fighting installation, the spindle (8) comprises a through throttle (9) for providing a connection (6-9-2-7) from the inlet (6) via the throttle (9) to the outlet (7) in the first position of the spindle (8), the spindle (8) is forced by a spring (10) into the first position when the pressure is equal on both sides of the throttle (9) of the spindle (8), the activation of the spray head is adapted to create a liquid flow from the outlet (7) and a pressure fall in the outlet (7) and over the throttle (9), and the throttle (9) and the spring (10) are dimensioned such that the pressure fall over the throttle (9), at least by a liquid flow therethrough at the operating pressure of the fire fighting installation, sets the spindle (8) in motion from the first position towards the second position.

## Patentansprüche

1. Ventil für Brandbekämpfungseinrichtungen, insbesondere für Einrichtungen, die mit einem hohen Druck arbeiten, wobei das Ventil einen Flüssigkeitseinlass (6), einen Flüssigkeitsauslass (7), eine Spindel (8) aufweist, die zwischen einer ersten Stellung, in der die Spindel (8) die unmittelbare Verbindung von dem Einlass (6) zu dem Auslass (7) unterbricht und einer zweiten Stellung hin- und herbewegbar ist, in der die Spindel (8) die direkte Verbindung von dem Einlass (6) zu dem Auslass (7) freigibt, dadurch gekennzeichnet, dass die Spindel (8) ein Stromventil (9) aufweist, das über das Stromventil (9) und eine auf den Flüssigkeitsstrom ansprechende Betätigungseinrichtung (2) eine Verbindung von dem Einlass (6) zu dem Auslass (7) herstellt, wenn sich die Spindel in ihrer ersten Stellung befindet, dass die Spindel (8) durch eine Feder (10) in die erste Stellung vorgespannt ist, wenn der Druck auf beiden Seiten des Stromventils der Spindel (8) gleich ist und dass das Stromventil (9) der Spindel (8) so dimensioniert ist, dass der Druckabfall über das Stromventil (9) wenigstens zufolge einer Flüssigkeitsdurchströmung bei dem Betriebsdruck der Brandbekämpfungseinrichtung ausreichend groß ist, um die Spindel (8) aus der ersten Stellung in Richtung auf die zweite Stellung in Bewegung zu setzen.

2. Ventil nach Anspruch 1, dadurch gekennzeichnet, dass die Spindel (8) eine Schulterfläche (12) aufweist, gegen die der Flüssigkeitsdruck an dem Einlass (6) einwirkt, nachdem die Spindel (8) aus der ersten Stellung herausbewegt wird, um die Spindel (8) in Richtung auf die zweite Stellung zu treiben.

3. Ventil nach Anspruch 1, dadurch gekennzeichnet, dass ein manuell betätigbares Absperrventil (4) in der Verbindung (6-9-2-7) enthalten ist.

4. Ventil nach Anspruch 1, dadurch gekennzeichnet, dass die Betätigungseinheit (2) ein Sensorelement (13) enthält, das auf eine Temperaturänderung der ruhenden bzw. strömenden Flüssigkeit anspricht, wobei das Sensorelement (13) so angeordnet ist, dass der Strömungsdurchgang hinter dem Sensorelement (13) eng ist.

5. Brandbekämpfungseinrichtung mit einer Antriebseinheit, mit einem Ventil (1) und mit einem Sprinklerkopf, wobei die Antriebseinheit dazu dient, einen Betriebsdruck für die Brandbekämpfungseinheit zu erzeugen und den Sprinklerkopf mit Löschflüssigkeit über das Ventil (1) zu versorgen, das Ventil (1) einen Flüssigkeitseinlass (6), einen Flüssigkeitsauslass (7) und eine bewegbare Spindel (8) aufweist, der Einlass (6) mit der Antriebseinheit verbunden ist, der Auslass (7) mit dem Sprinklerkopf verbunden ist und die Spindel (8) zwischen einer ersten Stellung, in der die Spindel (8) eine direkte Verbindung von dem Einlass (6) zu dem Auslass (7) absperrt, und einer zweiten Stellung hin- und herbewegbar ist, in der die Spindel (8) eine direkte Verbindung von dem Einlass (6) zu dem Auslass (7) freigibt, dadurch gekennzeichnet, dass das Ventil (1) ferner eine Betätigungseinheit (2) aufweist, die auf den Flüssigkeitsdruck an dem Auslass (7) anspricht, der dazu dient, die Antriebseinheit zu aktivieren, damit diese einen Betriebsdruck für die Brandbekämpfungseinrichtung erzeugt, dass die Spindel (8) ein Drosselventil (9) enthält, um über das Stromventil (9) eine Verbindung (6-9-2-7) von dem Einlass (6) zu dem Auslass (7) herzustellen, wenn sich die Spindel (8) in der ersten Stellung befindet, dass die Spindel (8) durch eine Feder (10) in die erste Stellung vorgespannt ist, wenn der Druck auf beiden Seiten des Stromventils (9) der Spindel (8) gleich ist, dass die Betätigung des Sprinklerkopfes dazu dient, einen Flüssigkeitsstrom aus dem Auslass (7) und einen Druckabfall an dem Auslass (7) und über das Stromventil (9) zu erzeugen und dass das Stromventil (9) und die Feder (10) so dimensioniert sind, dass der Druckabfall über das Stromventil (9) wenigstens zufolge einer Flüssigkeitsdurchströmung bei dem Betriebsdruck der Brandbekämpfungseinrichtung die Spindel (8) aus der ersten Stellung in Richtung auf die zweite Stellung in Bewegung setzt.

## Revendications

1. Vanne pour une installation anti-incendie, en particulier pour une installation qui fonctionne sous haute pression, la vanne comprenant une entrée à liquide (6), une sortie un liquide (7) et un tiroir (8) mobile entre une première position dans laquelle le tiroir (8) ferme une connexion directe depuis l'entrée (6) jusqu'à la sortie (7), et une seconde position dans laquelle le tiroir (8) permet une connexion directe depuis l'entrée (6) jusqu'à la sortie (7) ; caractérisée en ce que le tiroir (8) comprend un étranglement traversant (9) pour assurer une connexion depuis l'entrée (6) via l'étranglement (9) et une unité d'actionnement (2), sensible à l'écoulement de liquide, jusqu'à la sortie (7) dans la première position du tiroir (8), le tiroir (8) étant forcé par un ressort (10) jusque dans la première position lorsque la pression est égale des deux côtés de l'étranglement (9) du tiroir (8), et l'étranglement (9) du tiroir (8) étant dimensionné de telle façon que la chute de pression à travers l'étranglement (9), au moins en cas d'écoulement à travers celui-ci à la pression de fonctionnement de l'installation de lutte anti-incendie, soit suffisamment élevée pour mettre le tiroir (8) en mouvement depuis la première position vers la seconde position.

2. Vanne selon la revendication 1, caractérisée en ce que le tiroir (8) comprend une face en épaulement (12) sur laquelle agit la pression du liquide de l'entrée (6) après que le tiroir (8) se soit déplacé depuis la première position, afin d'entraîner le tiroir (8) vers la seconde position.

3. Vanne selon la revendication 1, caractérisée en ce qu'une vanne de coupure (4) à actionnement manuel est comprise dans la connexion (6-9-2-7).

4. Vanne selon la revendication 1, caractérisée en ce que l'unité d'actionnement (2) comprend un élément détecteur (13) qui réagit aux changements de température du liquide stationnaire ou en écoulement, respectivement, l'élément détecteur (13) étant positionné de telle façon que le passage de liquide le long de l'élément détecteur (13) soit étroit.

5. Installation de lutte anti-incendie comprenant une unité d'entraînement, une vanne (1) et une tête de pulvérisation, dans laquelle l'unité d'entraînement est adaptée à engendrer une pression de fonctionnement de l'installation de lutte anti-incendie et à fournir à la tête de pulvérisation du liquide d'extinction à travers la vanne (1), la vanne (1) comprenant une entrée à liquide (6), une sortie à liquide (7) et un tiroir mobile (8), l'entrée (6) étant connectée à l'unité d'entraînement, la sortie (7) étant connectée à la tête de pulvérisation, et le tiroir (8) étant mobile entre une première position dans laquelle le tiroir (8) ferme une connexion directe depuis l'entrée (6) jusqu'à la sortie (7), et une seconde position dans laquelle le tiroir (8) permet une connexion directe depuis l'entrée (6) jusqu'à la sortie (7) ; caractérisée en ce que la vanne (1) comprend en outre une unité d'actionnement (2) sensible à l'écoulement de liquide depuis la sortie (7) qui est adaptée à activer l'unité d'entraînement pour engendrer la pression de fonctionnement de l'installation de lutte anti-incendie, le tiroir (8) comprenant un étranglement traversant (9) pour assurer une connexion (6-9-2-7) depuis l'entrée (6) via l'étranglement (9) jusqu'à la sortie (7) dans la première position du tiroir (8), le tiroir (8) étant forcé par un ressort (10) jusque dans la première position lorsque la pression est égale des deux côtés de l'étranglement (9) du tiroir (8), l'activation de la tête de pulvérisation étant adaptée à engendrer un écoulement de liquide depuis la sortie (7) et une chute de pression dans la sortie (7) et de part et d'autre de l'étranglement (9), et l'étranglement (9) et le ressort (10) étant dimensionnés de telle façon que la chute de pression de part et d'autre de l'étranglement (9), au moins en cas d'écoulement travers celui-ci à la pression de fonctionnement de l'installation de lutte anti-incendie, met le tiroir (8) en déplacement depuis la première position vers la seconde position.
